# EUROPEAN PATENT SPECIFICATION

(11) **EP 3 565 714 B1**
(45) Date of publication and mention of the grant of the patent: **21.10.2020**
(21) Application number: 17818164.0
(22) Date of filing: 21.12.2017
(51) Int. Cl.: B29C 67/00, B33Y 50/02, B29C 64/393, B29C 64/182, B29C 64/165, B33Y 10/00

(54) **A METHOD FOR PRINTING A 3D PRODUCT AND A 3D PRINTING DEVICE**
VERFAHREN ZUM DRUCKEN EINES 3D-PRODUKTS UND 3D-DRUCK-VORRICHTUNG
PROCÉDÉ D'IMPRESSION D'UN PRODUIT 3D ET DISPOSITIF D'IMPRESSION 3D

(30) Priority: 03.01.2017 WO PCT/EP2017/050077
(43) Date of publication of application: 13.11.2019
(73) Proprietor: L3F Sweden AB, 545 31 Töreboda (SE)
(72) Inventor: EDVINSSON, Jerry, 545 93 Töreboda (SE)
(74) Representative: Valea AB
(86) International application number: PCT/EP2017/084124
(87) International publication number: WO 2018/127429

(56) References cited:
- EP-A2- 2 363 270
- WO-A1-2016/053263
- WO-A1-2017/108108
- US-A1- 2006 108 712
- US-A1- 2015 217 515
- GAO WEI ET AL: "The status, challenges, and future of additive manufacturing in engineering", COMPUTER AIDED DESIGN, vol. 69, 1 December 2015 (2015-12-01), pages 65-89, XP029280407, ISSN: 0010-4485, DOI: 10.1016/J.CAD.2015.04.001

## Description

### TECHNICAL FIELD

A method for manufacturing of one or more 3D products in one batch by additive manufacturing using a layer-by-layer technique and a 3D printing device for manufacturing one or more 3D products in one batch by additive manufacturing using a layer-by-layer technique.

### BACKGROUND

Additive manufacturing techniques comprise a process involving putting together or combining materials in order to manufacture 3D products from 3D modeling data, typically a computer-assisted design file, usually layer by layer, as opposed to subtractive manufacturing methodologies, such as traditional machining. These elementary volume elements, sometimes denoted "voxels", may be created and juxtaposed using a variety of different technical principles, for example by providing drops of photopolymerizable monomers by means of a print head, by selectively photopolymerizing with a source of UV light near the surface of a bath of monomer (stereolithography technique), or by melting polymer powder (selective laser melting (SLM) or selective laser sintering (SLS)) to mention a few.

Additive manufacturing techniques allow the geometry of 3D products to be defined with a great deal of flexibility, but raise a number of problems. In some fields, there is a need to be able to manufacture relatively large and geometrically complicated products and at a low cost. In other fields, care has been taken to manufacture small products even down to micro scale or nano scale. Independent of the field, the manufacturing time may have a significant impact on the costs. To reduce the manufacturing time, efforts have been made to print continuous products having substantially no distinct layers. Such manufacturing methods enabling the printing of such products may have the advantage of not being restricted to position the 3D model in a specific way with respect to the printing volume.

It appears however that many of the additive manufacturing methods are further restricted to the manufacture of one product at a time. There are several drawbacks with this for obvious reasons. One reason is of course that if it is possible to manufacture two products in one batch, the manufacturing time will be significantly reduced. However, once it has been realized that two or more products are to be produced in one single batch, other problems arises.

WO 2016/053263 A1 discloses virtual partitioning of a printing volume into part volumes in order to be able to print several different objects at the same time. The purpose of the partitioning in D1 is to be able to assign different parts of the print volume to different customers and to sort print jobs as space efficiently as possible in the available physical print volume.

EP 2363270 A2 discloses printing of more than one article at the same time, in particular a main object and a supporting frame around the main object. The underlying purpose is to save printing material, as printing material only has to be applied in an area where an object is actually being printed. D2 discloses that different parts of an object may be printed with ink (binder) of different colors.

US 2006/0108712 A1 discloses a device and method for producing a three-dimensional object by means of a generative production method which aims at rising the production speed by arranging the application units and building containers such that they can be moved relative to another in a manner allowing optimization of application of building material and solidification of applied material.

WO 2017/108108 A1 discloses a single build volume that may divided into multiple virtual build spaces, and wherein different build material may be allocated to each build space based on the parameters required by the specific object model to be produced in that space.

### SUMMARY

It is an object of the disclosure to provide a method for manufacturing a 3D product which permits one or more 3D products to be manufactured in a single physical printing batch, such that the one or more 3D products have different properties within the same product or between products. This object is at least partly achieved by means of the method according to claim 1.

The object is at least partly achieved by means of a method for controlling the manufacturing of one or more 3D products in one physical printing batch by additive manufacturing using a layer-by-layer technique using a 3D printing device in accordance with claim 1. The 3D printing device comprises a control unit adapted to govern a plurality of process parameters. The physical printing batch has a physical 3D printing volume and the method comprises the steps of; providing a virtual 3D printing volume representative of the physical 3D printing volume of the physical printing batch. Partitioning the virtual 3D printing volume into at least a first and a second zone. Assigning the first zone with a first process parameter, and the second zone with a second process parameter, the first process parameter and the second process parameter being of the same kind but having different values; whereby the first process parameter is different from the second process parameter. The method further involves providing a virtual printing batch representative of the physical printing batch, the virtual printing batch consisting of one or more 3D models corresponding to the one or more 3D products and arranging the virtual printing batch within the virtual 3D printing volume such that the virtual printing batch is arranged in the virtual 3D printing volume with a first part of the virtual printing batch positioned in the first virtual zone of the virtual 3D printing volume and a second part of the virtual printing batch positioned in the second virtual zone of the virtual 3D printing volume.

As disclosed herein, the first process parameter may differ from the second process parameter in kind or may be the same kind of process parameter, but having a different value.

The available selectable process parameters may differ between different types of 3D printing processes, such as between processes wherein the building material, e.g. polymers and metals, is also used as to consolidate the building material into a coherent product by sintering or melting of building material and processes wherein a separate bonding agent such as an adhesive binder is used to bind the building material into a coherent product.

The relevant process parameters as disclosed herein may be one or more of selectable variables of the process such as the type of building material, the ratio between the applied amounts of building material and adhesive, the particle size of the building material, the type of adhesive, the temperature of the adhesive, the application pressure of the adhesive, the layer application thickness, the layer applying unit speed, the layer bonding unit speed, heat supply, energy beam strength, heat supplied to an extrusion nozzle, application of colorants or other additives, etc.

By carefully selecting the process parameters, properties or characteristics of the resulting product or products such as strength, density/weight, price, resolution, brittleness, elasticity, durability, etc. may be controlled. The process parameters may also be selected in view of environmental aspects, hygienic aspects, compatibility and suitability for coming into contact with comestibles such as food or beverages, etc.

The present disclosure provides a method and a device which enables efficient production runs, i.e. cost effective manufacturing. It enables a flexible manufacturing of one or more 3D products having different properties in one and the same batch, i.e. one run, by permitting adjustment and control of process parameters to obtain different properties such as weight and porosity, cost per 3D product, strength of the 3D product as set out herein.

The batch-wise method as disclosed herein may be used to produce a product having different properties within different parts of the product and/or to produce two or more products wherein at least one product differs from at least one other product in the batch by having a different property such as different resolution, different density, comprising a different additive or a different amount of additive, etc.

The production of products having different properties may to advantage be used for test purposes, such as when trying out process conditions in order to optimize the printing process. As the batch of one or more products can be produced with different process parameters in different parts of the physical 3D printing volume, the process may be used to test the effect of e.g. varying the amount of bonding agent to be applied, varying the type of bonding agent, varying the pressure in application nozzles, varying the temperature of applied bonding agent, etc. The produced product or products may be examined and their properties may be evaluated as a function of a specific process parameter.

The virtual 3D printing volume of the batch may be partitioned along one or more axes; Z, X, or Y, preferably at least along the height axis, Z. The virtual 3D printing volume may advantageously be partitioned according to a Cartesian coordinate system. Preferably, at least one of the axes is aligned with a direction along which a layer applying unit travels, more preferably the X and Y axes form a plane and the material layers are substantially or completely aligned with said plane. The partitioning may be aligned with a displacement direction that individual movable units have on the 3D printing device. This will simplify the algorithm and the ease with which a user may interact with the 3D printing device.

The 3D printing device may comprise an image displaying unit. The virtual 3D printing volume may be shown in the form of an image on the image displaying unit. The virtual 3D printing volume is preferably depicted as the actual available physical printing volume drawn to scale. This will provide a visual and readily comprehensible representation of the available physical 3D printing volume and permit a user to conveniently sort and organize the 3D models which are to be printed in the different zones of the virtual 3D printing volume.

The partitioning of the virtual 3D printing volume may be implemented by partitioning the image on the displaying unit into the first and the second zones. This enables a user to easily partition the available virtual 3D printing volume and to sort selected 3D models in the available virtual 3D printing volume via the virtual 3D printing volume. The partitioning may be arranged to be performed by dragging and dropping delimiting perimeters of the first and second zones e.g. in the form of lines, curves or other shapes. As an alternative or a complement, the delimiting perimeters of the virtual zones may be formed by means of values entered by an operator of the 3D printing device.

The partitioned image on the displaying unit may be converted to 3D printing device readable data. Once the operator has selected the 3D models to print, and partitioned the virtual 3D printing volume into the selected number of zones, the image and the data it represents may be converted to 3D printing device readable data. The 3D printing device readable data may thereafter be forwarded to the 3D printing device as instructions to the 3D printing device and its different units.

The 3D printing device readable data may be sent to the 3D printing device e.g. wireless or via wires such as optical fiber. If the displaying unit is arranged at the 3D printing device, the data is converted at the 3D printing device to 3D printing device readable data. The image on the displaying unit may be representative of a cross section of the available physical 3D printing volume of the batch. Just as a matter of example, a suitable cross section may be formed along at least two axes X, Y, Z, preferably along the Z axis and the X or the Y axis. The height is advantageous to illustrate as it simplifies for the operator when positioning the 3D models.

The at least first zone and/or the second zone may be assigned with at least one additional process parameter. The at least one additional process parameter may be different or the same, but is preferably different. Such additional process parameter may be a selected coloring agent, additional binding agent, an additive, or the like. By enabling the selection of one or more additional process parameters, each zone may be tailored according to the operator's desire. It should be noted that the assignation of an additional parameter may be delimited by the same perimeters as the first and the second zones, i.e. the zones. Optionally, a new set of zones may be implemented. The virtual 3D printing volume may in this way be partitioned in additional zones which may be partly or completely overlapping with the previous zones. In this manner each selected process parameter may be the object of partitioning of the virtual 3D printing volume into a selected number of zones. The virtual 3D printing volume may thus be partitioned in one or more additional zones, said one or more additional zone may overlap the first and/or the second zone, or be aligned with the first and/or the second zone.

Adding at least one 3D model representative of a printable 3D product into the virtual 3D printing volume may be done before, simultaneously with, or after the partitioning of the virtual 3D printing volume into the first and the second zones. Optionally two or more 3D models representative of printable 3D products may be added into the virtual 3D printing volume before, simultaneously with, or after the partitioning of the virtual 3D printing volume into the first and the second zones. The 3D model(s) is/are added to the virtual 3D printing volume and preferably displayed on the displaying unit as an image representative of the available 3D printing volume. It is advantageous that the partitioning may be performed independently of when the 3D models are added into the virtual 3D printing volume. This gives great flexibility for an operator to easily sort how and when the 3D products are actually printed, and to provide the 3D products with the desired properties via the selection of the process parameters. Due to the fact that it is the available 3D printing volume that is partitioned and not individual 3D models, the partitioning may be done independently from the 3D models. As set out herein, the at least one 3D model(s) can be dragged and dropped on the image representing at least a portion of the 3D printable volume.

The method may comprise the step of; initiating printing of the at least two 3D products. Once the operator has partitioned the virtual 3D printing volume and imported the 3D models, the operator may initiate the printing of the 3D products. The initiation of the printing process does not necessarily need to be performed directly after the data has been converted to 3D printing device readable data. Instead, once printing has been initiated, the data derived from the virtual 3D printing volume, the partitioning and the 3D models may be converted in a layer by layer manner and transferred as instructions in a layer by layer manner. This enables an operator to add 3D models during the 3D printing process.

The at least two 3D products may be different 3D products in terms of size, shape, resolution, layer thickness, adhesive concentration, or combinations thereof. Alternatively, the at least two 3D products may be identical to each other but each product may comprise a portion which differs from another portion of the product with regard to resolution, layer thickness, composition, etc. Accordingly, the products may be based on the same 3D model but may vary e.g. in size or resolution or may have varying properties within the same product depending on how the 3D model of the product has been arranged in relation to the zones in the partitioned virtual 3D printing volume. This provides for a flexible and readily adaptable manufacturing method.

The method may be a method step in the manufacturing of one or more 3D products in one batch by additive manufacturing using a layer-by-layer technique using a 3D printing device.

It is further an object of the disclosure to provide a 3D printing device for manufacturing one or more 3D products in one physical printing batch by additive manufacturing using a layer-by-layer technique. The 3D printing device comprises a layer applying unit for applying a layer of bulk material, a layer bonding unit for binding a selected portion of the applied layer so as to form a 3D product. The 3D printing device comprises a control unit adapted to govern at least one process parameter. The control unit is arranged to provide a virtual 3D printing volume representative of the physical 3D printing volume of the physical printing batch and to partition the virtual 3D printing volume into at least a first and a second zone and; assign the first zone with a first process parameter, and the second zone with a second process parameter, the first process parameter and the second process parameter being of the same kind but having different values. The first process parameter is different with respect to the second process parameter. The 3D printing device is configured to provide a virtual printing batch representative of the physical printing batch, the virtual printing batch consisting of one or more 3D models corresponding to the one or more physical 3D products in the physical printing batch and is configured to arrange the virtual printing batch comprising the at least one 3D model within the virtual 3D printing volume such that the virtual printing batch is arranged in the virtual 3D printing volume with a first part of the virtual printing batch positioned in the first virtual zone of the virtual 3D printing volume and a second part of the virtual printing batch positioned in the second virtual zone of the virtual 3D printing volume.

The present disclosure also provides a device which enables efficient runs, i.e. cost effective manufacturing. It enables a flexible manufacturing of multiple 3D products in one batch, i.e. one run, in terms of permitting the manipulation of different parameters such as weight and porosity, cost per 3D product, strength of the 3D product just to mention of few.

The control unit of the 3D printing device may comprise a displaying unit, as set out herein and may be configured to project an image on the displaying unit, the image being representative of at least parts of an available physical 3D printing volume of the batch. Optionally or additionally, a virtual representation of the whole available physical 3D printing volume of the physical printing batch may be displayed. The displaying unit may be remotely arranged, at a distance from the 3D printing device, or may be locally arranged proximal to or integrated with the 3D printing device.

The binding action and application of the material layers are repeated until the one or more 3D products are formed. The method as disclosed herein provides for a flexible production of 3D products which permits individual control of the resolution for each 3D product and even of different parts of a 3D product in a simple and effective manner. The method enables at least two 3D products to be manufactured with different resolution in the same batch. Hence, it is not necessary to choose between high resolution, i.e. a high number of relatively thin material layers, and a fast manufacturing time which may be achieved by using relatively thick material layers. By controlling the thickness of the material layers, the ratio of binding agent and bulk material may be governed. The porosity and the weight of the final 3D products can thus be manipulated. Just as a matter of example, less binding agent may give lighter but more brittle 3D and less durable products which sometimes may be acceptable. If stronger products are desirable, more binding agent with respect to the material layer thickness may be applied.

The disclosure also relates to a computer program comprising program code means for performing the steps according to the method disclosed herein, when the program is run on a computer.

The disclosure also relates to a computer readable medium carrying a computer program comprising program code means for performing the method disclosed herein when the program product is run on a computer.

It should be noted that features disclosed with respect to the method may also be applicable on the device and features disclosed with respect to the device may also be applicable on the method.

This may concern products for direct use, such as building elements, ornamental mouldings, etc., as well as moulds and prototypes for the production of other products.

### BRIEF DESCRIPTION OF THE DRAWINGS

Non-limiting embodiments will be described in greater detail with reference to the accompanying figures in which;
figure 1 shows 3D models in the form of a doll illustrating an option to print similar 3D products having different resolution and size;
figure 2 a schematic view of a 3D printing device for additive manufacturing;
figure 3; a schematic view of a virtual 3D printing volume illustrating the available printing volume of a batch, and selected 3D models to be printed, with a view in perspective;
figure 4 shows the virtual 3D printing volume illustrating the available printing volume of a batch of figure 3 with a view along the X axis;
figure 5 shows a schematic process diagram of optional method steps and;
figure 6 shows a schematic process diagram of optional method steps.

### DETAILED DESCRIPTION OF PREFERRED EMBODIMENTS

By the expression "additive manufacturing" is herein meant, according to international standard ASTM 2792-12, manufacturing techniques comprising a process involving putting together or combining materials in order to manufacture 3D products from 3D modeling data such as a computer-assisted design file e.g. CAD, usually layer by layer, as opposed to subtractive manufacturing methodologies, such as traditional machining. The additive manufacturing method disclosed herein is preferably a binder jetting method in which a bonding agent, preferably a liquid bonding agent, is selectively deposited onto a particulate material to join the particulate material. The liquid bonding agent may be any suitable bonding agent, as set out herein. Binder jetting methods may be particularly useful when forming relatively large objects such as furniture, building elements, etc. Other additive manufacturing methods which may benefit from the present disclosure are powder bed fusion, directed energy deposition, material extrusion, vat photopolymerization, material jetting or sheet lamination.

Embodiments of the present disclosure will be described herein e.g. with reference to wood powder as particulate material. It should be noted however that the method or device disclosed herein is not limited to wood powder as such.

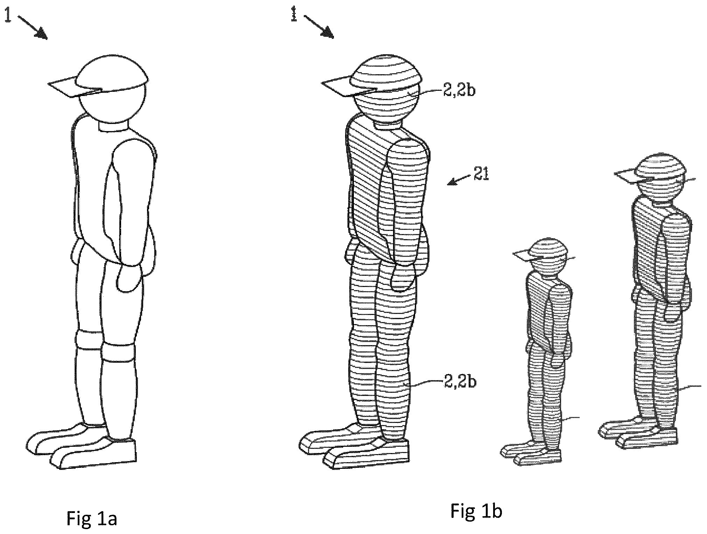

With reference to figure 1, the method according to the disclosure for manufacturing one or more 3D products in one batch by means of additive manufacturing using a layer-by-layer technique will be described in greater detail. The method includes that a layer of material, preferably particulate material, in this case wood powder, is applied onto a support, that binding agent is deposited onto the wood powder layer, whereupon an additional layer of wood powder is applied onto the preceding wood powder layer. Such alternate application of wood powder and deposition of binding agent is repeated a desired number of times, so that the wood powder is bonded into a continuous product by means of the binding agent both within each layer and between adjacent layers.

Figure 1a illustrates an example of a virtual model 1 in the form of a doll and Figure 1b schematically illustrates how the model 1 has been divided into horizontally oriented virtual slices 2. Accordingly, the model exists as 3D modelling data, e.g. in a CAD file, in a computer program. The computer-based model 1 is then used as input data to a control unit of the 3D printing device according to the disclosure in order to create a substantially similar real physical 3D product, in the example a doll, consisting of wood powder and binding agent. The basics of a suitable layer-by-layer technique are disclosed in the international patent application no. WO2006033621A1 assigned to L3F and will not be described in detail herein.

The layers 2b of wood powder in the real physical 3D product which correspond to the slices 2 of the virtual model will be more difficult to distinguish in the real product 21, especially if thinner layers are used for building up the product. Hence, with thinner layers comes a higher resolution. As is evident from Figure 1b, the shape of the product is created by means of forming a plurality of layers, preferably more than 10 layers and usually more than 50 layers, which can exhibit bonded areas of different sizes and different shapes, to overlap each other. Just as a matter of example, if a product which is 1 meter high is to be created from layers having a thickness of the order of 1 mm, approximately 1000 layers will be required.

The one or more 3D products are manufactured batch wise, the batch having a physical printing volume. The physical printing volume is the available volume which can be used to manufacture 3D products. As will be disclosed herein; a method according to the disclosure will enable manufacturing of one or more 3D products, preferably two or more 3D products, having different properties such as different material layer thickness, i.e. different resolution. A binding action may be performed on each applied material layer to consolidate the layer and bind it to a previously applied layer. When all layers have been applied and joined into a coherent object a 3D product is ultimately formed in accordance with the data of the virtual model which has been loaded into the 3D printing device.

By means of the present disclosure, the resolution of the one or more 3D products can be controlled by varying the thickness of the applied material layers such that by setting the layer thickness to a higher value, the manufacturing method may be made both more cost effective and faster but with a lower resolution in the produced 3D product or product part. Correspondingly, a lower value for the layer thickness will result in a 3D product or product part having higher resolution, but at the price of a more time consuming printing process.

Referring again to figure 1b, as can be noticed, the doll may thus be manufactured not only in different sizes, but also with different resolution, i.e. with different layer thickness. It is thus also possible to manufacture e.g. two dolls of equal size but having different resolution, i.e. with different layer thickness. As will be disclosed below, this can advantageously be done by partitioning a virtual representation of the available physical 3D printing volume into different virtual zones. Each virtual zone defines a boundary within which a specific process parameter governs, i.e. the virtual zones define boundaries for different process parameters so that virtual models of 3D printable objects may be positioned fully or partly within the virtual zones. The 3D products produced according to the method as disclosed herein will thereby be provided with different characteristics in different 3D products in the same batch and/or with different characteristics within the same 3D product depending on the partitioning of the virtual 3D printing volume into virtual zones, the assignment of process parameters to the zones and the positioning of the virtual models of the 3D product to be printed in relation to the virtual zones within the partitioned virtual 3D printing volume.

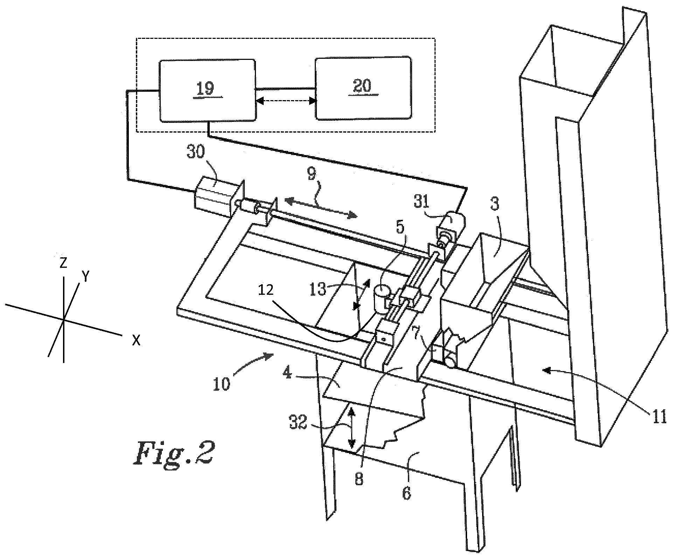

Figure 2 illustrates a 3D printing device for manufacturing one or more 3D products in one batch by means of additive manufacturing using a layer-by-layer technique, in this case a continuous product of wood powder. The device includes a layer applying unit 3 for feeding out particulate material, in the shown embodiment wood powder, forming a material layer onto a support 4. A layer bonding unit 5, in this case a depositing unit for performing a binding action, e.g. by depositing binding agent, onto selected portions of the applied wood powder layer. The device according to embodiments herein may further comprise an optional reinforcing element application unit for application of reinforcing elements such as continuous reinforcing filaments e.g. nylon strings.

For the purpose of orientation, the height or vertical direction corresponds to a Z axis, the length, or longitudinal direction corresponds to an X axis, and the width, or transverse direction corresponds to a Y axis. The Z, X, Y axes are perpendicular to each other.

In the embodiment of the 3D printing device according to the disclosure illustrated in Figure 2, the 3D printing device comprises a receptacle 6, which, for reasons of clarity is shown cut off at the front. A base plate 4, also referred to as a support 4, is arranged inside the receptacle 6 and is vertically adjustable along the Z axis. However, it should be noted that instead of having a vertically adjustable support, the support may be fixed and the other units may be adjustable in a vertical direction so as to enable the formation of material layers and the performing of a binding action. Just as a matter of example, the layer applying unit 3 and the layer bonding unit 5 and optionally a levelling unit if such is present may be vertically adjustable with respect to the support.

At the upper end of the receptacle 6, the layer applying unit 3, in the following referred to as the feeder 3, is arranged on a movable carriage 8 together with the layer bonding unit 5 and an optional layer levelling unit 7 for levelling the layer and/or for removing excessive wood powder. The feeder 3 and the layer levelling unit 7 are arranged for reciprocating motion along at least the X axis, i.e. in a direction parallel to the base plate 4, for example from a first end 10 to a second end 11 of the receptacle 6 and vice versa. The layer bonding unit 5 which exhibits at least one nozzle 12, preferably a plurality of individual nozzles 12, for deposition of binding agent, is preferably arranged for displacement along the two axes X, Y, preferably in a plane parallel to the support 4, in order to enable deposition of binding agent onto desired areas. In principle, also a depositing means arranged for displacement along only one axis could be used. Such arrangement is less preferred as it requires a depositing means which exhibits a large number of separate nozzles arranged along an axis being perpendicular in relation to the displacement axis of the depositing means. Other mechanisms for depositing binding agent may alternatively be used. Just as a matter of example, one or more robotic arms may be used such as one or more Cartesian robot arms. Different optional arrangements may be used to adapt the thickness of the bulk material layers such as a scraper and/or a rotating element such as a cylinder or brush. An excessive bulk material removing unit may also be provided such as a suction and/or blowing device for transporting away excessive bulk material.

The layer levelling unit 7 may be operated to level out each applied layer, or to level out after a selected number of layers have been applied. Just as a matter of example and in general terms, the levelling unit 7 may have one levelling cycle for each cycle of the layer applying unit 3. Optionally the layer levelling unit 7 may have one cycle for every second cycle, or more, of the layer applying unit 3.

The 3D printing device further comprises a control unit 19 operatively connected with a display unit 20. The display unit 20 may be remotely positioned with respect to the 3D printing device and may be connected via wires or in a wireless manner e.g. via Wifi or via other communication protocols, or via a 3G, 4G or 5G network. The control unit 19 may include a computer provided with a program for converting one or more virtual 3D models into signals, said signals being used for controlling different components of the device, such as the layer applying unit 3, the layer bonding unit 5, the layer levelling unit 7 and the base plate 4. By means of transmitting these signals to motors 30, 31 being arranged for driving the mechanical components, the product according to the invention can be produced in an automatic way. As mentioned above, the control unit 19 and the display unit 20 may be arranged locally at the 3D printing device or remotely thereto. A remote location is illustrated in Fig. 2 by the control unit 19 and the display unit 20 being inscribed in a dashed box.

In the shown embodiment, binding agent is applied onto selected portions of a bulk material layer in order to form a specific geometry of the 3D product by means of a controlled distribution of binding agent on each layer of bulk material. In the production, the portions of the layers of bulk material where binding agent has been deposited will consolidate and form the one or more 3D products, while remaining portions of the bulk material layers will remain unbonded, and thus not contribute to the finished one or more 3D products. However, before it is removed, the unbonded material can constitute a support for the 3D products during their manufacture.

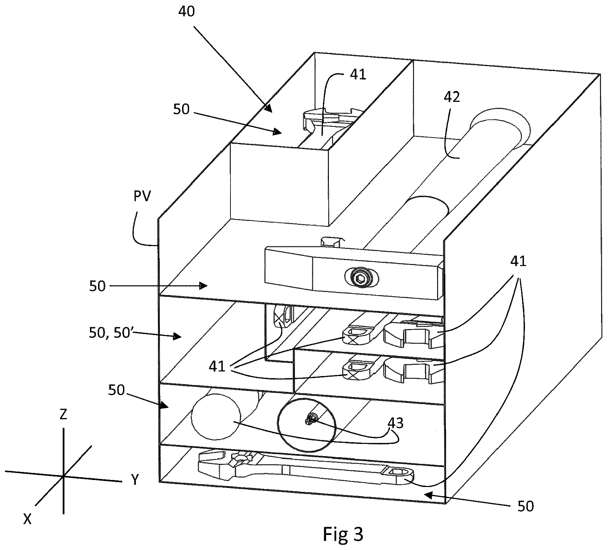

Figure 3 illustrates how the 3D modelling data may be manipulated by a user as represented on the display unit 20. Figure 3 shows a virtual image 40 of a printing batch, the virtual image 40 constituting a virtual representation of the physical printing volume PV of the batch. A number of 3D models representing printable 3D products are visualized in the virtual image 40; a plurality of wrenches 41, a hammer 42 and a plurality of screw drivers 43. The 3D models have been arranged at different positions within the printing volume PV, preferably following a Cartesian coordinate system.

Further illustrated in figure 3 are also a plurality of virtual zones 50. As set out herein, the virtual 3D printing volume PV has been partitioned into at least a first and a second virtual zone 50, 50'. The first and the second virtual zones 50, 50' define virtual boundaries within within the virtual 3D printing volume PV. In these different virtual zones 50, 50', each of the virtual zones 50, 50' has been assigned with a process parameter which is different from a process parameter in the other of the virtual zones 50, 50'. By assigning the at least first and second virtual zones 50, 50' with at least one differing process parameter, the method as disclosed herein may be carried out to produce one or more 3D product(s) having different properties in different parts of one and the same 3D product and/or having properties differing between different products. Just as a matter of example, the process parameters may be any variable of the process which can be selected in order to control properties or characteristics of the resulting product such as material layer thickness, adhesive concentration, layer applying unit speed, layer bonding unit speed, heat, beam energy, beam size, particle size, particle type, heat on extrusion nozzle, adhesive temperature, speed of adhesive or material from nozzles, different adhesives/material, and/or colors. The different process parameters assigned to the different virtual zones in the virtual 3D printing volume govern the properties and characteristics of the produced 3D products, such as strength, weight, price, resolution, color, durability, environmental friendliness, food compatibility, etc.

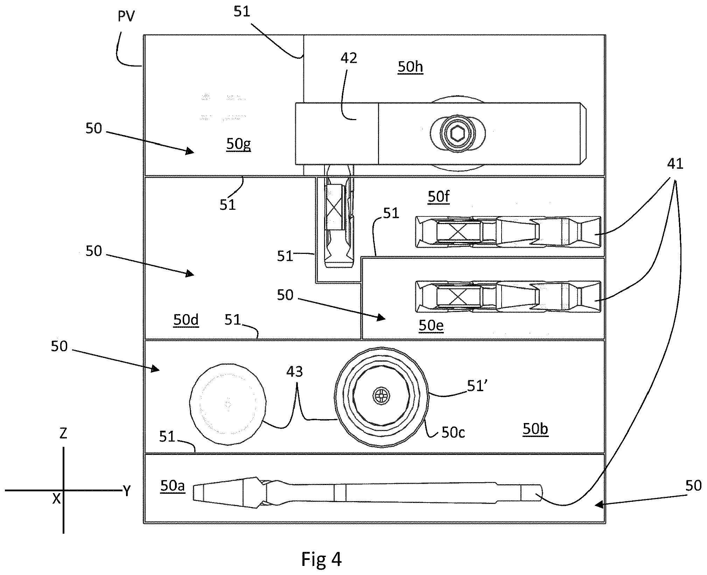

Figure 4 shows a view of the virtual printing volume in figure 3 as seen along the X axis. The virtual zones 50, 50' are defined by delimiting perimeters 51, 51'. In the shown embodiment, all the delimiting perimeters 51, 51' are substantially straight lines, except for one delimiting perimeterwhich is a circular perimeter 51' of the virtual zone 50c which is drawn around one of the screw drivers 43. The periphery of the virtual 3D printing volume PV defines the outer boundaries of the adjacent virtual zones. As can be noticed in figure 4, at least one of the delimiting perimeters 51 is parallel with the Y axis. Hence the virtual 3D printing volume PV may thus be partitioned along at least one of the axes X, Y, Z.

By partitioning the virtual 3D printing volume into two or more virtual zones, e.g. as shown in the embodiment of figure 4, the virtual 3D printing volume, and thus any 3D model positioned fully or partly within a virtual zone in the virtual 3D printing volume, may be assigned with different process parameters such as different material layer thickness, different bonding agent concentration or the like. This enables an operator to sort and coordinate manufacturing of a plurality of 3D products in a very easy and efficient manner. The operator may simply add at least one 3D model to the image of the virtual 3D printing volume representing the physical 3D printing volume and thereafter partition the virtual 3D printing volume into at least a first and a second virtual zone. The virtual zones may be assigned with different process parameters to enable 3D printed products to be manufactured with different properties in one and the same batch.

With reference to figure 4 and starting from zero, or origin, of the Z axis and going upwards eight zones can be identified:
1^{st} zone, 50a, a wrench, material layer thickness 0.1 mm.
2^{nd} zone, 50b, a screw driver, material layer thickness 0.3 mm.
3^{rd} zone, 50c, a screw driver, material layer thickness 0.1 mm.
4^{th} zone, 50d, no 3D model, material layer thickness 0.4 mm.
5^{th} zone, 50e, two wrenches, material layer thickness 0.9 mm.
6^{th} zone, 50f, 3 wrenches, material layer thickness 0.05 mm.
7^{th} zone, 50g, 1 hammer and part of a wrench from 6^{th} zone, material layer thickness 0.1 mm.
8^{th} zone, 50h, 1 wrench, material layer thickness 0.25 mm.

After having partitioned the virtual 3D printing volume into suitable virtual zones and assigning the zones with different process parameters, a user may import, or otherwise add, 3D models of products to be printed to the virtual 3D printing volume, placing the 3D models fully or partly within one or more of the zones to thereby select properties for each 3D product based on the process parameters assigned to the different virtual zones in the virtual 3D printing volume. It is also possible that the 3D models are imported, or otherwise added, before the 3D printing volume has been partitioned into different zones. The simple process of partitioning the 3D printing volume enables an operator to assign different process parameters to different 3D products in one batch without actually manipulating the 3D models. Hence the data of the 3D models remain intact. In an embodiment, the method may comprise the step of; providing a 3D model containing zone partitioning data. In this case, the zone partitioning, or the conditions for a zone, is carried with the data for the 3D model and as such, may be imported together with data for the 3D model. A 3D model may thus contain data to automatically position, or assign, the 3D model to a specific zone.

The method enables copies to be manufactured of the same 3D product but with different properties as a consequence of being formed under the influence of different process parameters. High resolution and low resolution 3D products may thus be manufactured simultaneously, and even in the same X-Y plane.

The method as disclosed herein may involve controlling layer thickness and thereby resolution in accordance with the teaching of the co-pending international patent application PCT/EP2017/050079. The method may comprise a step of; setting a first thickness of a reference layer and forming one or more material layers having a second thickness. The second thickness may be set as a multiple of an integer and the first thickness of the reference layer. If the first thickness of the reference layer is Tᵣ and the integer is n, then the multiple of the first thickness of the reference layer and the integer is n•Tᵣ. By using a lowest common denominator, i.e. the reference layer, when selecting the thickness of the material layers in the batch, 3D products may easily be manufactured, faster and at lower costs. The step provides a flexible method which permits individual control of the resolution for each 3D product in a simple and effective manner even in the same plane. The integer may be from 1, 2, 3, 4, 5, 6, 7, 8, 9, 10 or more, such as 1-10, more preferably within the range of 1-10 000, 1-5000, or 1-1000, or 1-100. In an embodiment, the integer is >1. The integer 1 may thus be excluded, or in other words, in an embodiment the integer may be 2, 3, 4, 5, 6, 7, 8, 9, 10 or more, preferably within the range of 2-10, 2-10 000, 2-5000, 2-1000, 2-100.

Non-limiting examples will be disclosed below to illustrate optional steps in the method disclosed herein.

### Example 1

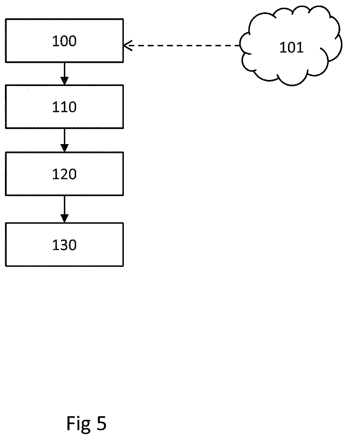

Figure 5 shows a schematic process diagram illustrating an embodiment of the method according to the present disclosure. In this case, the device uses wood powder as bulk material and a hot melt adhesive as binding agent. The wood powder has an average particle size of 0.05 mm.

At step 100, a computer comprising a display unit, forming a part of a control unit for manufacturing one or more 3D products by means of additive manufacturing using a layer-by-layer technique, is loaded with 3D modelling data for one or more 3D products, preferably a plurality of 3D products. In this case the 3D models are a hammer, a screw driver and a wrench. The 3D models may be downloaded from the Internet, e.g. via a cloud based server 101 or may be retrieved from a local storage device such as a hard drive on the computer. The 3D models may be positioned in the virtual 3D printing volume so as to determine when and in which order they should be manufactured. The easiest way to do this is to separate the three 3D products with respect to the Z axis (as shown in figure 4 for example) so that they are not arranged in the same plane defined by the Y-X axes.

At step 110, the virtual 3D printing volume is partitioned into different virtual zones. The partitioning of the virtual 3D printing volume can be made in different manners such as visually by introducing delimiting perimeters e.g. in the form of lines, on an image representing the physical 3D printing volume. The lines represent values in a Cartesian coordinate system defined by the Z, X, and Y axes. Another way to set up delimiting perimeters may be strictly numerically.

At step 120, the operator assigns process parameters to each virtual zone. Optionally, the operator may assign deviations from a number of pre-set process parameters which automatically are assigned to each zone. Just as matter of example, a process parameter for a first zone may be that the thickness of an applied material layer is set to 0.1 mm, and a process parameter for a second zone may be that the thickness of an applied material layer is set to 0.3 mm. The difference in thickness of the applied material layers will provide two 3D products produced from 3D models positioned in the different zones with different resolution. Accordingly, the different process parameters assigned to the different virtual zones of the partitioned virtual printing volume may e.g. be used to produce 3D products differing in terms of having a different material/bonding agent ratio, or as an option having different material layer thickness but having the same material/bonding agent ratio.

At step 130, the 3D models and the partitioned 3D printing volume will be converted to 3D printing device readable data and be forwarded to the 3D printing device as instructions to the different units of the 3D printing device. The data formed by the above input and terms to the 3D models may optionally be sent to the device control unit which converts the input data to readable data containing instructions for the 3D printing device. The 3D printing device is now ready for manufacturing the selected 3D products.

During manufacturing, the layer applying unit repeatedly applies material layers having a selectable thickness, such as 0.1 mm, across the available printing volume, i.e. the plane defined by the Y-X axes, while the layer bonding unit repeatedly applies binding agent in a pattern corresponding to a specific slice of the one or more 3D model(s) or binds the layer in any other suitable way. In this case, the application of binding agent is controlled so that the correct amount of cycles of material layers are achieved for the specific 3D model. In this specific case, after each cycle the layer applying unit has applied a material layer having the thickness of 0.1 mm, the layer bonding unit applies binding agent every cycle in the 1^{st} zone and on the selected area of the wrench in the 1^{st} zone 50a. Similarly the layer bonding unit applies binding agent every 3^{rd} cycle on the selected area of the screw driver in the 2^{nd} zone 50b. Similarly the layer bonding unit applies binding agent every cycle on the selected area of the screw driver in the 3^{rd} zone 50c. The layer bonding unit applies binding agent every cycle on the selected area of the wrench. This may be controlled by selectively opening and closing the valves jetting the binding agent from the layer bonding unit for example. Thereby the different resolutions are achieved. The layers may be formed by using a lowest common denominator, i.e. a reference layer, when selecting the thickness of the material layers in the batch. Each material layer is then formed as a multiple of the reference layer and an integer.

### Example 2

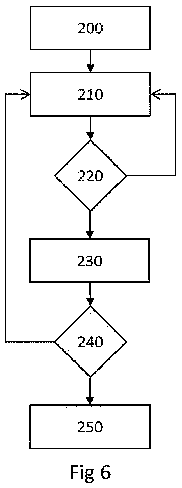

In general terms, and with reference to figure 6, a method may comprise one or more of the following steps:
At step 200 the control unit of the 3D printing device receives the readable input data derived from the one or more 3D model(s) and the different virtual zones and their delimiting perimeters of the 3D printing volume.

At step 210, the layer applying unit applies one or more bulk material layers, e.g. of particulate material, preferably wood powder, such that a material layer having the minimum thickness set by the operator, in this case 0.1 mm is formed. The material layer thickness of 0.1 mm is selected in this case with reference to figure 4 and the 1^{st} zone. An optional levelling step may be performed using a levelling unit after each applied material layer, or after a selected number of applied material layers.

At step 220 the control unit checks if the readable input data demands that binding agent is to be deposited onto selected surfaces of the previously laid material layer based on the thickness for each material layer and the relative positions of the 3D models in the 3D printing volume with respect to the X, Y, and Z axes. It should be noted that other process parameters may have been selected. Hence the step may be to check the demands for the selected process parameter e.g. adhesive concentration, layer applying unit speed, layer bonding unit speed, strength, weight, price, resolution environmental aspects just to mention a few.

If yes, at step 230, binding agent is applied on the selected surfaces.

If no, return to 210, the layer applying unit applies another material layer.

At step 240, the control unit checks to see if additional material layers are required. If yes, return to 210.

If no, at step 250, the procedure is terminated and optional post-treatment and actions may be performed such as removing access material, emptying the printing volume, performing cleaning and service procedures etc.

### Bulk material

Bulk material is herein meant any material which may be used to form a 3D product by performing a binding action on the bulk material. Preferably the bulk material is a particulate material but liquid materials may be used such as liquid polymers, wax, metal, alloys or the like. The particulate material may be an inert particulate material or a reactant particulate material. A material layer may comprise one or more layers of bulk material.

Examples of inert particulate material may be selected from metals, inert polymers, inert salts, inert organic materials or inert ceramics, or combinations thereof.

Examples of **metals** include aluminium, steel, titanium, iron, alloys, or the like.

Examples of **inert polymers** include poly (methyl methacrylate), polystyrene, polyamide, polyester, a latex, polyethylene, polypropylene, polyurethane, polyvinyl chloride, polyvinyl acetate, cross-linked polyvinyl pyrrolidone, hydrophilic polyurethane, poly (ethylene terephthalate), thermoplastic urethane, styrene-acrylonitrile copolymer, thermoplastic polyolefin, an epoxy-based polymer, polyether, polyamine, a polyacid, a polycarbonate, a vinyl polymer, an aromatic polyamide, a diene polymer, poly (phenylene oxide), polysiloxane, polynorbornene, polyisoprene, a polyphenylene ether, styrene-butadiene block copolymer, acrylonitrile-butadiene-styrene, high impact polystyrene and copolymers thereof.

Examples of **inert salts** include sodium carbonate, sodium bicarbonate, sodium borate, sodium chloride, sodium sulfate, potassium sulfate, potassium chloride, magnesium sulfate, magnesium chloride, potassium aluminum sulfate, sodium polyphosphate, sodium acetate, hydrous calcium sulphate, calcium phosphate, sodium silicate, and hydrated lime (Ca (OH) 2).

Examples of **inert organic materials** include starch, cellulose fibers, wood powder, wax, resin, bone, protein, carbohydrates, sugars, textile fibers and dietary fibers.

Examples of **inert ceramics** include gypsum, limestone, clay, aluminum oxide, aluminum silicate, calcium silicate, silicon dioxide, titanium dioxide, glass, iron oxide, zinc oxide, magnetite, aluminum hydroxide, magnesium oxide, calcium phosphate, zirconium silicate, silicon carbide, boron nitride, boron carbide and borosilicate.

### Wood powder

A preferred bulk material may be wood powder. The expression wood powder as used herein refers to a powder made of a wood material. Different tree species, soft wood or hard wood, such as pine, spruce, birch, larch or others, and different forms of wood originating from branches, trunks, stumps, roots of trees, or in the form of wood waste, such as recycled wood waste, can be used as a starting material for producing the wood powder. Examples of suitable wood materials are wood chips originating from machining of homogenous wood, such as sawdust, cutter shavings, or the like. Wood powder will thus include the same substances as the initial wood does such as lignin, pectin and ash.

In comparison to wood powder made from wood material, cellulose or cellulose fibers may be derived from wood material but have been treated in a number of process steps, and thus represents another kind of material. A cellulose fiber is thus a more refined and elegant material and in some aspects lack substances that wood powder would include. Just as a matter of example, cellulose fibers may be natural occurring fibers such as cotton fibers or linen fibers, manufactured fibers from e.g. plants which have been processed into pulp. Examples of plants are crops, wood, leaves or the like. Rayon or viscose fibers are examples of manufactured cellulose fibers.

The use of a wood powder as a bulk material may be advantageous since wood powder can be produced at a low cost, from an easily accessible raw material (wood). The usage of wood powder may even imply that material considered as waste material becomes useful. Furthermore, wood powder is biodegradable and can be used to manufacture biodegradable and thereby environmentally friendly 3D products.

### Size of particulate matter

The particles of the particulate material such as powder e.g. wood powder, can exhibit different shapes and sizes. The particle size can be from relatively small, so that the powder obtains a flour-like consistency, to relatively large, implying that the individual particles can be distinguished at a visual inspection. Advantageously, the particles of a given powder are substantially of the same size in order to obtain a uniform quality of the final product.

For many products, a particle size in the size interval 0.001-5 mm, and preferably of the order of 0.01-2 mm, can be used when forming the material layers. If, for example, a particle size of 1 mm is chosen, it can be ensured by means of filtration, sometimes referred to as sieve analysis, that the particles in one and the same powder has a size which does not exceed, for example, 1.2 mm, and a size which does not fall below, for example, 0.8 mm.

The size of the individual particulate matter may be as small as atom size, or nano size. Just as a matter of example, atom by atom material layers may be formed using molecular beam epitaxy (MBE) which allows for the vertical stacking of individual atomic layers i.e. the Z-axis, in combination with scanning probe lithography, which uses an extremely sharp tip to move and place individual atoms in a lateral direction, i.e. the X- and Y-axes. A Laser particle sizer Analysette 22 NanoTec, by Fritsch, may be used. Such device generally has measuring range of 0.01 - 2100 µm. Standard ISO 13320. Following theory Fraunhofer, Mie. Fraunhofer theory for larger particles when their exact optical parameters are unknown and Mie theory for the smallest particles with known optical parameters. It is possible to select both theories in a FRITSCH MaS control software.

Other particle size measurements methods which may be used to determine a particle size are sieve analysis, sedimentation, image particle analysis, microscope counting to mention a few.

### Binding actions

Suitable binding actions may be to add binding agent, to add one or more chemical reactants to form a binding agent on or in the material layer, heat treatment to e.g. melt portions of the material layer such that the material layer is bonded. Other binding actions may be radiation treatment, electromagnetic radiation, electron beam, light treatment or combinations thereof.

### Binding agent

Different types of binding agents may be used. The useful binding agents have in common that they are capable of bonding together the powder, or particles, in the bulk material so that a desired strength or other desired properties of the 3D product can be achieved. The binding agent can be water-based, but the binding agent is suitably water resistant. Whether the binding agent should be water resistant or not, however, depends on the 3D product which is to be manufactured and possible post-treatments of the product. One suitable binding agent is wood glue, but also a hot melt adhesive, for example a plastic-based one, which is heated during application could be used. Most wood glues which are present on the market have the advantages of being relatively cost efficient and easy to handle, environmentally friendly and particularly suited for bonding wood materials. Non-limiting examples of glue are Polyvinyl acetate (PVA) glue, animal glue such as hide glue, Polyurethane glue, Urea-formaldehyde resin adhesives, Resorcinol-formaldehyde resin glue, Cyanoacrylate glue preferably with additive for delayed hardening time.

The binding agent can also be applied as two or more individual components which together form a binding agent, e.g. via a chemical reaction between the two or more components such as epoxy resin and hardener. The binding agent may be formed on the material layer itself or before being applied onto the material layer.

The concentration or dilution of the binding agent (water content if a water-based binding agent is concerned) can be varied. Thereby, also the moisture content of the used bulk material has a certain importance, since the total amount of moisture originating from the powder and the binding agent has to be capable of at least wetting the material to the desired extent in order to enable bonding of selected portions of the bulk material layers. The moisture content of the bulk material should also be adapted in order to give the bulk material properties making the bulk material easy to work when being laid out in layers. The binding agent may be applied such that each layer is saturated with binding agent, or such that the binding agent sinks into the preceding material layer, or even into preceding material layers. In the latter case, binding agent is applied such that the material layer is bonded together but not saturated. Instead binding agent may be applied onto a subsequently applied material layer but yet still penetrate into the preceding one or more material layers. Binding agent may penetrate into two or more such as 2-6 previous material layers. This will provide a 3D product which is continuous in terms of that no, or substantially no, material layers may be identified should the 3D product be cut open and inspected.

### Additives

In addition to the particulate material constituting the base of the material such as wood powder, and, accordingly, the base of the finished 3D product, it is also possible to add small quantities of other substances/materials to the binding agent and/or to the material layer in order to obtain specific properties of the 3D product formed from the particulate material. The particulate material, such as wood powder, should form at least 50 %, 51 % or more, 60 % or more, 70 % or more, 80 % or more, 90 % or more, 95 % or more of the material layer. Preferably, different substances can be added to the binding agent and/or the material layer, e.g. as a mixture with the particulate material.

One example of such an additive is colouring agent, colouring pigment, or the like, in order to give the end product a certain colour. By means of choosing different colours of the binding agent for different layers of the product, the finished product can obtain different colours on different visible surfaces.

Other additives are reinforcing elements such as reinforcing strings, e.g. nylon strings.

One or more flame retardants may further be added. Flame retardants are generally divided into three groups; minerals, Organohalogen compounds and Organophosphorus compounds. Examples of minerals are; magnesium hydroxide (MDH), aluminium hydroxide (ATH), red phosphorus, boron compounds, huntite and hydromagnesite, and various hydrates. Examples of organohalogen compounds are organochlorines such as chlorendic acid derivatives and chlorinated paraffins; polymeric brominated compounds such as brominated polystyrenes, brominated carbonate oligomers (BCOs), brominated epoxy oligomers (BEOs), tetrabromophthalic anyhydride, tetrabromobisphenol A (TBBPA) and hexabromocyclododecane (HBCD), organobromines such as decabromodiphenyl ether (decaBDE), decabromodiphenyl ethane (a replacement for decaBDE).

A flame retardant synergist may further be added to improve the efficiency of the flame retardant, such as antimony trioxide, pentoxide and sodium antimonate.

Examples of organophosphorus compounds are phosphonates such as dimethyl methylphosphonate (DMMP); and phosphinates such as aluminium diethyl phosphinate, triphenyl phosphate (TPP), resorcinol bis(diphenylphosphate) (RDP), bisphenol A diphenyl phosphate (BADP), and tricresyl phosphate (TCP).

Flame retardants comprising phosphorus and a halogen may also be used such as and chlorinated organophosphates such as tris(1,3-dichloro-2-propyl)phosphate (chlorinated tris or TDCPP) and tetrakis(2-chlorethyl)dichloroisopentyldiphosphate (V6), tris(2,3-dibromopropyl) phosphate (brominated tris).

## Claims

1. A method for controlling the manufacturing of one or more 3D products in one physical printing batch by additive manufacturing using a layer-by-layer technique using a 3D printing device (10), said 3D printing device (10) comprising a control unit (19) adapted to govern a plurality of process parameters, said physical printing batch having a physical 3D printing volume, said method comprising the steps of;
- providing a virtual 3D printing volume (40) representative of said physical 3D printing volume (PV) of said batch;
- partitioning said virtual 3D printing volume (40) into at least a first and a second virtual zone (50a-50h);
- assigning said first zone (50a-50h) with a first process parameter, and said second zone (50b-50h) with a second process parameter, the first process parameter and the second process parameter being of the same kind but having different values; whereby said first process parameter is different with respect to said second process parameter
- providing a virtual printing batch representative of said physical printing batch, said virtual printing batch consisting of one or more 3D models corresponding to said one or more 3D products; and
- arranging said virtual printing batch within said virtual 3D printing volume (40) such that said virtual printing batch is arranged in said virtual 3D printing volume (40) with a first part of said virtual printing batch positioned in said first virtual zone of said virtual 3D printing volume and a second part of said virtual printing batch positioned in said second virtual zone of said virtual 3D printing volume.

2. The method according to claim 1, whereby said virtual 3D printing volume (40) of said batch is partitioned along one or more axes; Z, X, or Y, preferably at least along the height axis (Z).

3. The method according to claim 1 or 2, wherein said 3D printing device further comprises a displaying unit (20), and whereby said virtual 3D printing volume (40) is provided in the form of an image on said displaying unit (20), wherein partitioning said virtual 3D printing volume (40) is implemented by partitioning at least a portion of said image into said first and said second virtual zones (50a-50h), wherein said partitioned image is converted to 3D printing device readable data and wherein said method comprises
sending said 3D printing device readable data to said 3D printing device.

4. The method according to any one of the claims 2 or 3, whereby said image is representative of a cross section (Z-Y) of said physical 3D printing volume (PV) of said physical printing batch.

5. The method according to any one of the preceding claims, whereby said at least one process parameter is one or more process parameter(s) selected from the list of; material layer thickness, adhesive concentration, layer applying unit speed, layer bonding unit speed, heat, beam energy, beam size, particle size, particle type, heat on extrusion nozzle, adhesive temperature, speed of adhesive or material from nozzles, type of bonding agent, type of bulk material, or additive content.

6. The method according to any one of the preceding claims, whereby said at least first zone (50a) and/or said second zone (50b) is assigned with at least one additional process parameter.

7. The method according to any one of the preceding claims, whereby said method comprises the step of;
- adding at least one 3D model (41, 42, 43) representative of a printable 3D product, whereby said at least one 3D model (41, 42, 43) is added before, simultaneously with, or after said partitioning of said virtual 3D printing volume (40) into said first and said second zones (50a-50h).

8. The method according to any one of the preceding claims, whereby said virtual 3D printing volume (40) is partitioned in one or more additional zones (50a-50h), said one or more additional zone(s) may overlap said first and/or said second zone, or be aligned with, or positioned next to, said first and/or said second zone (50a-50h).

9. The method according to any one of the preceding claims, whereby said method comprises the step of; initiating printing of said at least two 3D products.

10. The method according to any one of the preceding claims, whereby said at least two 3D products are different 3D products in terms of shape, resolution, layer thickness, adhesive concentration, and/or combinations thereof.

11. The method according to any one of the preceding claims, whereby said method is a method step in the manufacturing of one or more 3D products in one physical printing batch by additive manufacturing using a layer-by-layer technique using a 3D printing device.

12. A 3D printing device for manufacturing one or more 3D products in one physical printing batch by additive manufacturing using a layer-by-layer technique, said 3D printing device comprising a layer applying unit (3) for applying a layer of bulk material;
a layer bonding unit (5) for binding a selected portion of said applied layer so as to form a 3D product;
said 3D printing device comprising a control unit (19) adapted to govern at least one process parameter; wherein
said control unit (19) is arranged to provide a virtual 3D printing volume (40) representative of said physical 3D printing volume (PV) of said physical printing batch;
to partition said virtual 3D printing volume (40) into at least a first and a second virtual zone (50a-50h);
to assign said first virtual zone (50a-50h) with a first process parameter, and said second virtual zone (50a-50h) with a second process parameter, the first process parameter and the second process parameter being of the same kind but having different values, whereby said first process parameter is different with respect to said second process parameter;
to provide a virtual printing batch representative of said physical printing batch, said virtual printing batch consisting of one or more 3D models corresponding to said one or more 3D products; and
- to arrange said virtual printing batch within said virtual 3D printing volume (40) such that said virtual printing batch is arranged in said virtual 3D printing volume (40) with a first part of said virtual printing batch positioned in said first virtual zone of said virtual 3D printing volume and a second part of said virtual printing batch positioned in said second virtual zone of said virtual 3D printing volume.

13. The 3D printing device according to claim 12, wherein said control unit (19) comprises a displaying unit (20) and is configured to project an image on said displaying unit (20) representative of at least parts of an available 3D printing volume (PV) of said batch.

14. A computer program comprising program code means for performing the steps according to any one of the claims 1-11, when the program is run on a computer.

15. A computer readable medium carrying a computer program comprising program code means for performing the steps according to any one of the claims 1-11 when the program product is run on a computer.

## Patentansprüche

1. Verfahren zum Steuern der Herstellung von einem oder mehreren 3D-Produkten in einer physischen Druckcharge durch additive Herstellung unter Verwendung einer Schicht-für-Schicht-Technik unter Verwendung einer 3D-Druckvorrichtung (10), wobei die 3D-Druckvorrichtung (10) eine Steuerungseinheit (19) umfasst, die angepasst ist, um eine Vielzahl von Prozessparametern zu regeln, wobei die physische Druckcharge ein physisches 3D-Druckvolumen aufweist, wobei das Verfahren folgende Schritte umfasst;
- Bereitstellen eines virtuellen 3D-Druckvolumens (40), das für das physische 3D-Druckvolumen (PV) der Charge repräsentativ ist;
- Unterteilen des virtuellen 3D-Druckvolumens (40) in mindestens eine erste und zweite virtuelle Zone (50a-50h);
- Zuordnen zu der ersten Zone (50a-50h) eines ersten Prozessparameters, und zu der zweiten Zone (50b-50h) eines zweiten Prozessparameters, wobei der erste Prozessparameter und der zweite Prozessparameter von der gleichen Art sind, aber unterschiedliche Werte aufweisen; wobei der erste Prozessparameter in Bezug auf den zweiten Prozessparameter unterschiedlich ist
- Bereitstellen einer virtuelle Druckcharge, die für die physische Druckcharge repräsentativ ist, wobei die virtuelle Druckcharge aus einem oder mehreren 3D-Modellen besteht, die dem einen oder den mehreren 3D-Produkten entsprechen; und
- Anordnen der virtuellen Druckcharge mit dem virtuellen 3D-Druckvolumen (40) so, dass die virtuelle Druckcharge in dem virtuellen 3D-Druckvolumen (40) mit einem ersten Teil der virtuellen Druckcharge in der ersten virtuellen Zone des virtuellen 3D-Druckvolumens positioniert und einem zweiten Teil der virtuellen Druckcharge in der zweiten virtuellen Zone des virtuellen 3D-Druckvolumens positioniert angeordnet ist.

2. Verfahren nach Anspruch 1, wobei das virtuelle 3D-Druckvolumen (40) der Charge entlang von einer oder mehreren Achsen; Z, X, oder Y, vorzugsweise mindestens entlang der Höhenachse (Z) unterteilt ist.

3. Verfahren nach Anspruch 1 oder 2, wobei die 3D-Druckvorrichtung weiter eine Anzeigeeinheit (20) umfasst, und wobei das virtuelle 3D-Druckvolumen (40) in der Form eines Bildes in der Anzeigeeinheit (20) bereitgestellt ist, wobei das Unterteilen des virtuellen 3D-Druckvolumens (40) durch Unterteilen von mindestens einem Abschnitt des Bildes in die erste und die zweite virtuelle Zone (50a-50h) umgesetzt wird, wobei das unterteilte Bild in von der 3D-Druckvorrichtung lesbare Daten umgewandelt wird, und wobei das Verfahren Senden der von der 3D-Druckvorrichtung lesbaren Daten an die 3D-Druckvorrichtung umfasst.

4. Verfahren nach einem der Ansprüche 2 oder 3, wobei das Bild für einen Querschnitt (Z-Y) des physischen 3D-Druckvolumens (PV) der physischen Druckcharge repräsentativ ist.

5. Verfahren nach einem der vorstehenden Ansprüche, wobei der mindestens eine Prozessparameter einer oder mehrere Prozessparameter sind, ausgewählt aus der Liste von; Materialschichtdicke, Klebstoffkonzentration, Geschwindigkeit der Einheit zum Auftragen der Schichten, Geschwindigkeit der Einheit zum Binden der Schichten, Hitze, Strahlenergie, Strahlgröße, Partikelgröße, Partikelart, Hitze an der Extrusionsdüse, Klebstofftemperatur, Geschwindigkeit von Klebstoff oder Material aus der Düse, Art des Bindemittels, Art des Schüttguts oder Additivgehalt.

6. Verfahren nach einem der vorstehenden Ansprüche, wobei der mindestens ersten Zone (50a) und/oder zweiten Zone (50b) mindestens ein zusätzlicher Prozessparameter zugeordnet ist.

7. Verfahren nach einem der vorstehenden Ansprüche, wobei das Verfahren folgende Schritte umfasst;
- Hinzufügen von mindestens einem 3D-Modell (41, 42, 43), das für ein druckbares 3D-Produkt repräsentativ ist, wobei das mindestens eine 3D-Modell (41, 42, 43) vor, gleichzeitig mit oder nach dem Unterteilen des virtuellen 3D-Druckvolumens (40) in die erste und zweite Zone (50a-50h) hinzugefügt wird.

8. Verfahren nach einem der vorstehenden Ansprüche, wobei das virtuelle 3D-Druckvolumen (40) in eine oder mehrere zusätzliche Zonen (50a-50h) unterteilt ist, wobei die eine oder die mehreren zusätzlichen Zonen die erste und/oder die zweite Zone überlappen können oder an der einen oder den mehreren zusätzliches Zonen (50a-50h) ausgerichtet oder daneben positioniert sein können.

9. Verfahren nach einem der vorstehenden Ansprüche, wobei das Verfahren den Schritt; Starten des Druckens der mindestens zwei 3D-Produkte umfasst.

10. Verfahren nach einem der vorstehenden Ansprüche, wobei die mindestens zwei 3D-Produkte hinsichtlich Form, Auflösung, Schichtdicke, Klebstoffkonzentration, und/oder Kombinationen daraus unterschiedliche 3D-Produkte sind.

11. Verfahren nach einem der vorstehenden Ansprüche, wobei das Verfahren ein Verfahrensschritt in der Herstellung von einem oder mehreren 3D-Produkten in einer physischen Druckcharge durch additive Herstellung unter Verwendung einer Schicht-für-Schicht-Technik unter Verwendung einer 3D-Druckvorrichtung ist.

12. 3D-Druckvorrichtung zur Herstellung von einem oder mehreren 3D-Produkten in einer physischen Druckcharge durch additive Herstellung unter Verwendung einer Schicht-für-Schicht-Technik, wobei die 3D-Druckvorrichtung eine Einheit zum Auftragen von Schichten (3) zum Auftragen einer Schüttgutschicht umfasst;
eine Einheit zum Binden von Schichten (5) zum Binden eines ausgewählten Abschnitts der aufgetragenen Schicht, um ein 3D-Produkt zu bilden;
wobei die 3D-Druckvorrichtung eine Steuerungseinheit (19) umfasst, die angepasst ist, um mindestens einen Prozessparameter zu regeln;
wobei die Steuerungseinheit (19) angeordnet ist, um ein virtuelles 3D-Druckvolumen (40) bereitzustellen, das für das physische 3D-Druckvolumen (PV) der physischen Druckcharge repräsentativ ist;
um das virtuelle 3D-Druckvolumen (40) in mindestens eine erste und eine zweite virtuelle Zone (50a-50h) zu unterteilen;
um der ersten virtuellen Zone (50a-50h) einen ersten Prozessparameter und der zweiten virtuelle Zone (50a-50h) einen zweiten Prozessparameter zuzuordnen, wobei der erste Prozessparameter und der zweite Prozessparameter von der gleichen Art sind, aber unterschiedliche Werte aufweisen, wobei der erste Prozessparameter in Bezug auf den zweiten Prozessparameter unterschiedlich ist;
um eine virtuelle Druckcharge breitzustellen, die für die physische Druckcharge repräsentativ ist, wobei die virtuelle Druckcharge aus einem oder mehreren 3D-Modellen besteht, die dem einen oder den mehreren 3D-Produkten entsprechen; und
- die virtuelle Druckcharge innerhalb des virtuellen 3D-Druckvolumen (40) so anzuordnen, dass die virtuelle Druckcharge in dem virtuellen 3D-Druckvolumen (40) mit einem ersten Teil der virtuellen Druckcharge in der ersten virtuellen Zone des virtuellen 3D-Druckvolumens positioniert und einem zweiten Teil der virtuellen Druckcharge in der zweiten virtuellen Zone des virtuellen 3D-Druckvolumens positioniert angeordnet ist.

13. 3D-Druckvorrichtung nach Anspruch 12, wobei die Steuerungseinheit (19) eine Anzeigeeinheit (20) umfasst und ausgelegt ist, um ein Bild, das mindestens für Teile eines verfügbaren 3D-Druckvolumens (PV) der Charge repräsentativ ist, auf die Anzeigeeinheit (20) zu projizieren.

14. Computerprogramm, umfassend Programmcodemittel zum Durchführen der Schritte nach einem der Ansprüche 1 - 11, wenn das Programm auf einem Computer ausgeführt wird.

15. Computerlesbares Medium, das ein Computerprogramm trägt, das Programmcodemittel zum Durchführen der Schritte nach einem der Ansprüche 1 - 11 umfasst, wenn das Programm auf einem Computer ausgeführt wird.

## Revendications

1. Procédé pour commander la fabrication d'un ou de plusieurs produits 3D dans un lot d'impression physique par fabrication additive utilisant une technique couche par couche utilisant un dispositif d'impression 3D (10), ledit dispositif d'impression 3D (10) comprenant une unité de commande (19) adaptée pour gouverner une pluralité de paramètres de processus, ledit lot d'impression physique ayant un volume d'impression 3D physique,
ledit procédé comprenant les étapes de :
- fourniture d'un volume d'impression 3D virtuel (40) représentatif dudit volume d'impression 3D physique (PV) dudit lot ;
- séparation dudit volume d'impression 3D virtuel (40) en au moins une première et une seconde zone virtuelle (50a-50h) ;
- attribution à ladite première zone (50a-50h) d'un premier paramètre de processus, et à ladite seconde zone (50b-50h) d'un second paramètre de processus, le premier paramètre de processus et le second paramètre de processus étant de la même sorte mais ayant des valeurs différentes ; selon lequel ledit premier paramètre de processus est différent par rapport audit second paramètre de processus
- fourniture d'un lot d'impression virtuel représentatif dudit lot d'impression physique, ledit lot d'impression virtuel étant constitué d'un ou de plusieurs modèles 3D correspondant auxdits un ou plusieurs produits 3D ; et
- agencement dudit lot d'impression virtuel au sein dudit volume d'impression 3D virtuel (40) de sorte que ledit lot d'impression virtuel soit agencé dans ledit volume d'impression 3D virtuel (40) avec une première partie dudit lot d'impression virtuel positionnée dans ladite première zone virtuelle dudit volume d'impression 3D virtuel et une seconde partie dudit lot d'impression virtuel positionnée dans ladite seconde zone virtuelle dudit volume d'impression 3D virtuel.

2. Procédé selon la revendication 1, selon lequel ledit volume d'impression 3D virtuel (40) dudit lot est séparé selon un ou plusieurs axes ; Z, X, ou Y, de préférence au moins selon l'axe de hauteur (Z).

3. Procédé selon la revendication 1 ou 2, dans lequel ledit dispositif d'impression 3D comprend en outre une unité d'affichage (20), et selon lequel ledit volume d'impression 3D virtuel (40) est fourni sous la forme d'une image sur ladite unité d'affichage (20), dans lequel la séparation dudit volume d'impression 3D virtuel (40) est mise en œuvre par séparation d'au moins une portion de ladite image dans ladite première et ladite seconde zone virtuelle (50a-50h), dans lequel ladite image séparée est convertie en données lisibles par dispositif d'impression 3D et dans lequel ledit procédé comprend
l'envoi desdites données lisibles par dispositif d'impression 3D audit dispositif d'impression 3D.

4. Procédé selon l'une quelconque des revendications 2 ou 3, selon lequel ladite image est représentative d'une section transversale (Z-Y) dudit volume d'impression 3D physique (PV) dudit lot d'impression physique.

5. Procédé selon l'une quelconque des revendications précédentes, selon lequel ledit au moins un paramètre de processus est un ou plusieurs paramètres de processus sélectionnés dans la liste de : épaisseur de couche de matériau, concentration en adhésif, vitesse d'unité d'application de couche, vitesse d'unité de liaison de couche, chaleur, énergie de faisceau, taille de faisceau, taille de particule, type de particule, chaleur sur buse d'extrusion, température d'adhésif, vitesse d'adhésif ou de matériau depuis les buses, type d'agent de liaison, type de matériau en vrac, ou teneur en additif.

6. Procédé selon l'une quelconque des revendications précédentes, selon lequel à ladite au moins une première zone (50a) et/ou ladite seconde zone (50b) est attribué au moins un paramètre de processus supplémentaire.

7. Procédé selon l'une quelconque des revendications précédentes, selon lequel ledit procédé comprend l'étape de ;
- ajout d'au moins un modèle 3D (41, 42, 43) représentatif d'un produit 3D imprimable, selon lequel ledit au moins un modèle 3D (41, 42, 43) est ajouté avant, simultanément à, ou après ladite séparation dudit volume d'impression 3D virtuel (40) en ladite première et ladite seconde zone (50a-50h).

8. Procédé selon l'une quelconque des revendications précédentes, selon lequel ledit volume d'impression 3D virtuelle (40) est séparé en une ou plusieurs zones supplémentaires (50a-50h), lesdites une ou plusieurs zones supplémentaires peuvent chevaucher ladite première et/ou ladite seconde zone, ou être alignées avec, ou positionnées près de, ladite première et/ou ladite seconde zone (50a-50h).

9. Procédé selon l'une quelconque des revendications précédentes, selon lequel ledit procédé comprend l'étape de; lancement d'impression desdits au moins deux produits 3D.

10. Procédé selon l'une quelconque des revendications précédentes, selon lequel lesdits au moins deux produits 3D sont des produits 3D différents en termes de forme, de résolution, d'épaisseur de couche, de concentration en adhésif, et/ou de combinaisons de celles-ci.

11. Procédé selon l'une quelconque des revendications précédentes, selon lequel ledit procédé est une étape de procédé dans la fabrication d'un ou de plusieurs produits 3D dans un lot d'impression physique par fabrication additive utilisant une technique couche par couche utilisant un dispositif d'impression 3D.

12. Dispositif d'impression 3D pour fabriquer un ou plusieurs produits 3D dans un lot d'impression physique par fabrication additive utilisant une technique couche par couche, ledit dispositif d'impression 3D comprenant une unité d'application de couche (3) pour appliquer une couche de matériau en vrac ;
une unité de liaison de couche (5) pour lier une portion sélectionnée de ladite couche appliquée de façon à former un produit 3D ;
ledit dispositif d'impression 3D comprenant une unité de commande (19) adaptée pour gouverner au moins un paramètre de processus ;
dans lequel
ladite unité de commande (19) est agencée pour fournir un volume d'impression 3D virtuel (40) représentatif dudit volume d'impression 3D physique (PV) dudit lot d'impression physique ;
pour séparer ledit volume d'impression 3D virtuel (40) en au moins une première et une seconde zone virtuelle (50a-50h) ;
pour attribuer à ladite première zone virtuelle (50a-50h) un premier paramètre de processus, et à ladite seconde zone virtuelle (50a-50h) un second paramètre de processus, le premier paramètre de processus et le second paramètre de processus étant de la même sorte mais ayant des valeurs différentes, selon lequel ledit premier paramètre de processus est différent par rapport audit second paramètre de processus ;
pour fournir un lot d'impression virtuel représentatif dudit lot d'impression physique, ledit lot d'impression virtuel étant constitué d'un ou de plusieurs modèles 3D correspondant auxdits un ou plusieurs produits 3D ; et
- pour agencer ledit lot d'impression virtuel au sein dudit volume d'impression 3D virtuel (40) de sorte que ledit lot d'impression virtuel soit agencé dans ledit volume d'impression 3D virtuel (40) avec une première partie dudit lot d'impression virtuel positionnée dans ladite première zone virtuelle dudit volume d'impression 3D virtuel et une seconde partie dudit lot d'impression virtuel positionnée dans ladite seconde zone virtuelle dudit volume d'impression 3D virtuel.

13. Dispositif d'impression 3D selon la revendication 12, dans lequel ladite unité de commande (19) comprend une unité d'affichage (20) et est configurée pour projeter une image sur ladite unité d'affichage (20) représentative au moins de parties d'un volume d'impression 3D disponible (PV) dudit lot.

14. Programme d'ordinateur comprenant un moyen de code de programme pour réaliser les étapes selon l'une quelconque des revendications 1-11, lorsque le programme est exécuté sur un ordinateur.

15. Support lisible par ordinateur portant un programme d'ordinateur comprenant un moyen de code de programme pour réaliser les étapes selon l'une quelconque des revendications 1-11 lorsque le produit programme est exécuté sur un ordinateur.
